Europäisches Patentamt

European Patent Office

Office européen des brevets

(19)

(11) Numéro de publication : **0 457 664 A1**

# (12) DEMANDE DE BREVET EUROPEEN

(21) Numéro de dépôt : **91401233.1**

(22) Date de dépôt : **14.05.91**

(51) Int. Cl.⁵ : **B29C 51/04, B29C 51/26**

(30) Priorité : **14.05.90 FR 9006003**

(43) Date de publication de la demande :
**21.11.91 Bulletin 91/47**

(84) Etats contractants désignés :
**CH DE ES FR GB IT LI**

(71) Demandeur : **ERCA HOLDING**
**Zone Industrielle de Courtaboeuf Avenue du**
**Pacifique**
**F-91942 Les Ulis Cédex (FR)**

(72) Inventeur : **Torterotot, Roland**
**Le Plessis Mornay, Longvilliers**
**F-78730 Saint-Arnoult-en-Yvelines (FR)**

(74) Mandataire : **Hasenrader, Hubert et al**
**Cabinet BEAU DE LOMENIE 55, rue**
**d'Amsterdam**
**F-75008 Paris (FR)**

(54) **Dispositif et procédé de formage d'articles creux en matière thermoplastique.**

(57)  L'invention concerne un dispositif de formage (1) d'articles creux à partir d'une bande thermoplastique (3), du type comportant un bloc de moule (5) et un bloc de contre-moule (8) muni d'autant de cavités cylindriques (9) que le bloc de moule (5) possède de chambres de formage (6) dans chacune desquelles est monté un poinçon de formage (10) présentant une partie inactive supérieure et une partie active inférieure, susceptible de pénétrer verticalement dans la chambre de formage correspondante (6).

Ce dispositif est caractérisé en ce que la partie inactive de chaque poinçon de formage (10) présente une hauteur axiale inférieure à la largeur maximale dudit poinçon (10), que chaque poinçon de formage (10) est surmonté d'un piston de guidage (15) qui coulisse de façon étanche dans la cavité cylindrique correspondante (9) du bloc de contre-moule (8) et que l'espace annulaire (14) se trouvent en dessous du piston de guidage (15) est susceptible de communiquer périodiquement avec une source de gaz comprimé à travers au moins un conduit de liaison (16).

EP 0 457 664 A1

Jouve, 18, rue Saint-Denis, 75001 PARIS

*fig.1*

La présente invention concerne un dispositif de formage d'articles creux tels que des récipients, à partir d'une bande thermoplastique préalablement chauffée à une température convenant au thermoformage. Un tel dispositif de formage est connu par le brevet FR-2 028 281 et comporte, d'une part, en dessous du trajet horizontal d'une bande thermoplastique, un bloc de moule verticalement mobile entre une position haute de thermoformage des récipients, position dans laquelle ledit bloc de moule est appliqué contre ladite bande, et une position basse de démoulage desdits récipients, ce bloc de moule étant muni d'au moins une chambre de formage ouverte à sa partie supérieure et de même forme interne que l'article ou récipient à thermoformer, et, d'autre part, au-dessus dudit trajet horizontal, un bloc de contre-moule soit fixe, soit faiblement mobile verticalement entre une position haute dans laquelle l'extrémité inférieure du bloc de contre-moule est légèrement écartée du trajet horizontal de la bande thermoplastique, et une position basse dans laquelle ladite extrémité inférieure est en contact avec ladite bande thermoplastique et serre celle-ci contre l'extrémité supérieure du bloc de moule en position haute, c'est-à-dire contre le bord supérieur de chaque chambre de formage. Le bloc de contre-moule est muni d'autant de cavités cylindriques que le bloc de moule comporte de chambres de formage avec chacune desquelles est alignée axialement une desdites cavités.

Dans ce type de dispositif connu, un poinçon de formage est monté verticalement mobile dans chaque cavité cylindrique avec un certain jeu latéral par rapport à la face intérieure de celle-ci et coaxialement par rapport à ladite cavité et à la chambre de formage correspondante. Ce poinçon de formage présente une partie inactive supérieure et une partie active inférieure, poinçon dont la partie inactive reste dans la cavité cylindrique et dont la partie active est susceptible de pénétrer dans la chambre de formage correspondante jusqu'au voisinage du fond de celle-ci et possède des dimensions similaires mais inférieures à celles de ladite chambre de formage, l'espace annulaire délimité par les faces intérieures de la chambre de formage et de la cavité cylindrique, d'une part, et par la face périphérique du poinçon de formage, d'autre part, étant raccordé périodiquement à une source de gaz comprimé.

Dans ce type de dispositif de formage connu, la partie active du poinçon de formage est surmontée d'une partie inactive cylindrique de diamètre identique à celui de l'extrémité supérieure de ladite partie active et d'une hauteur au moins égale à la course verticale de ladite partie active. De ce fait, la masse à accélérer et à ralentir au début et à la fin de chaque course de descente et de montée du poinçon de formage est importante et empêche une augmentation du nombre de courses dudit poinçon par unité de temps. Un autre inconvénient de ce dispositif connu réside dans le fait que la partie inactive du poinçon de formage est très longue, c'est-à-dire au moins égale à la hauteur de la partie active dudit poinçon et que le volume de l'espace annulaire se trouvant au niveau de la partie inactive du poinçon constitue un volume mort important conduisant à une consommation inutile et importante en gaz comprimé. Par ailleurs, l'espace annulaire entourant le poinçon de formage et délimité par celui-ci et la face intérieure de la cavité cylindrique du bloc de contre-moule ne peut être fermé hermétiquement qu'à la fin de la course descendante du poinçon de sorte que le gaz comprimé appliquant une zone déterminée de la bande thermoplastique contre la face intérieure de la chambre de formage ne peut être introduit dans ledit espace annulaire qu'à l'arrêt du poinçon à la fin de la course descendante de celui-ci.

La présente invention a pour but de supprimer ou tout au moins d'atténuer les inconvénients mentionnés ci-dessus.

Ce but est atteint dans le cadre d'un dispositif de formage du type initialement indiqué du fait que la partie inactive de chaque poinçon de formage présente une hauteur axiale inférieure à la largeur maximale dudit poinçon, que chaque poinçon de formage est surmonté d'un piston de guidage qui coulisse de façon étanche dans la cavité cylindrique correspondante du bloc de contre-moule et que l'espace annulaire se trouvant en dessous du piston de guidage est susceptible de communiquer périodiquement avec une source de gaz comprimé à travers au moins un conduit de liaison.

Grâce à cette conception, les masses en mouvement et la consommation en gaz comprimé sont réduites et l'injection du gaz comprimé dans l'espace annulaire peut être effectuée déjà pendant la course descendante du poinçon de formage.

Ce nouveau dispositif de formage est en outre très avantageux lorsqu'il est utilisé dans le cadre d'une installation de conditionnement stérile du type connu, par exemple, par la demande de brevet allemand DT-OS 2 754 816.

L'invention vise aussi un procédé de formage d'articles creux tels que des récipients, à partir d'une bande thermoplastique. Selon un procédé de formage connu, on préchauffe des zones déterminées successives de la bande thermoplastique à la température de thermoformage, on enserre de part et d'autre le bord d'au moins une zone préchauffée de la bande thermoplastique entre, d'une part, l'extrémité supérieure d'un bloc de moule inférieur contenant au moins une chambre de formage et, d'autre part, l'extrémité inférieure d'un bloc de contre-moule supérieur comportant au moins une cavité cylindrique qui est coaxiale à ladite chambre de formage et dans laquelle est logé, avec un jeu latéral, un poinçon de formage disposé coaxialement à ladite chambre de formage et verticalement mobile entre une position haute dans laquelle son extrémité inférieure est rétractée entièrement dans ladite cavité cylindrique, et, une position basse dans laquelle ladite extrémité inférieure du poinçon est proche du fond de la chambre de formage lorsque celle-ci occupe sa position haute de thermoformage, on thermoforme un article creux à partir de la zone de bande enserrée sur son bord, en poussant ladite zone de bande à l'intérieur de la chambre de formage à l'aide du poinçon de formage et en injectant un gaz sous pression dans le volume délimité par ladite zone de bande enserrée, le poinçon de formage et la cavité cylindrique en vue d'appliquer ladite zone de bande enserrée, contre la face intérieure et le fond de la chambre de formage.

Les inconvénients de ce procédé connu sont ceux énumérés préalablement au sujet du dispositif de formage connu par le brevet français FR-2 028 281.

Le but de l'invention est de supprimer ces inconvénients. Ce but est atteint dans le cadre d'un procédé de formage du type sus-mentionné du fait que, avant l'opération de thermoformage d'un article creux ou récipient, on ferme hermétiquement le volume délimité par la zone préchauffée de bande thermoplastique enserrée sur son bord entre le bloc de moule et le bloc de contre-moule, par la face extérieure du poinçon de formage et par la face intérieure de la cavité cylindrique, on maintient ce volume hermétiquement fermé pendant toute la course descendante du poinçon de formage et l'on injecte dans ce volume hermétiquement fermé le gaz sous pression au plus tard à la fin de la course descendante du poinçon de formage.

En raison de ces mesures, la consommation en gaz comprimé est réduite et la cadence de thermoformage des récipients est augmentée. En outre, le gaz enfermé dans le volume délimité par le piston de guidage, le poinçon de formage, la zone de bande thermoplastique et la face intérieure de la cavité cylindrique forme une sorte de film lubrifiant à la surface du poinçon et facilite le fluage et l'extension de ladite zone en empêchant que la matière thermoplastique de cette dernière n'adhère au pourtour dudit poinçon.

Un dispositif de formage d'articles creux tels que de récipients, à partir d'une feuille thermoplastique, comportant dans une enceinte de guidage disposée au-dessus du bloc de moule un piston de guidage coulissant de façon étanche dans ladite enceinte et surmontant le poinçon de formage duquel il est solidaire, est connu par le brevet américain US-3 450 807 (G. W. Cheney). Toutefois, ce dispositif de formage connu appartient à une catégorie de dispositifs différente de celle du dispositif selon l'invention du fait que le dispositif connu ne peut enserrer la bande thermoplastique entre le bord supérieur de la chambre de formage prévue dans le bloc de moule, et le bord inférieur de l'enceinte de guidage assimilée à la cavité cylindrique du bloc de contre-moule du dispositif selon l'invention, que son poinçon de formage pénètre entièrement dans la chambre de formage lors du thermoformage d'un article creux, que son piston de guidage est conformé en tant qu'outil de découpe coopérant avec l'arête de découpe d'une gorge annulaire ménagée dans le bord supérieur du bloc de moule et que le diamètre extérieur de l'espace annulaire prévu entre la paroi de l'enceinte de guidage et le poinçon de formage et délimitée vers le haut par le piston de guidage est plus grand que le diamètre maximal de la chambre de formage d'un récipient.

En outre, comme le dispositif connu est destiné à étirer la feuille thermoplastique avant de la transformer partiellement en un récipient, le poinçon de formage comporte en dessous du piston de guidage une série de canaux qui sont raccordés alternativement à une source de vide pour étirer la feuille thermoplastique en la bombant vers l'intérieur de l'enceinte de guidage et en l'appliquant contre le fond et une partie du pourtour du poinçon de formage, et à une source de gaz comprimé pour plaquer ensuite cette feuille thermoplastique contre la paroi latérale et le fond de la chambre de formage du bloc de moule.

Ce dispositif connu ne se prête pas au thermoformage d'un récipient par utilisation d'un poinçon de formage et d'un gaz comprimé, sans étirage préalable de la feuille thermoplastique par aspiration de celle-ci contre ledit poinçon sous l'action d'une dépression agissant sur la face supérieure de la feuille, face constituant ultérieurement la face interne du récipient, ou par application de ladite feuille contre ledit poinçon sous l'action d'une surpression agissant sur la face inférieure de ladite feuille, face constituant ultérieurement la face extérieure dudit récipient.

En plus, dans le cas du dispositif connu, la matière thermoplastique de la feuille enserrée doit être appliquée contre le poinçon de formage de façon à recouvrir entièrement sa face inférieure et son pourtour avant de pouvoir utiliser du gaz comprimé pour appliquer ladite matière thermoplastique contre la face interne de la chambre de formage. De ce fait, la cadence de production des récipients est faible.

En outre, du fait que la feuille thermoplastique est enserrée entre deux serre-flans à l'extérieur de l'enceinte de guidage et du bord de la chambre de formage et que la découpe du récipient formé s'effectue à l'intérieur de la zone de serrage de la feuille thermoplastique, les chutes ou déchets en matière thermoplastique qu'entraîne l'utilisation du dispositif connu, sont très élevés.

D'autres caractéristiques et avantages de l'invention ressortiront de la description suivante de deux modes de réalisation du dispositif de formage, modes représentés sur le dessin annexé dans lequel

    – les figures 1 et 2 montrent des vues en élévation d'une ocupe verticale axiale à travers un premier mode de réalisation du dispositif de formage,

– les figures 3 et 4 montrent des vues en élévation d'une coupe verticale axiale à travers un deuxième mode de réalisation dudit dispositif et

– la figure 5 est une vue en plan d'une coupe horizontale à travers le poinçon de formage selon la ligne V-V des figures 2 et 4.

Le dispositif de formage 1 d'articles creux ou de récipients 2, tel que représenté sur le dessin permet de thermoformer lesdits récipients 2 à partir d'une bande thermoplastique 3 dont le trajet est horizontal. Ce dispositif de formage 1 fait, en général, partie d'une installation de conditionnement de type connu, par exemple, par le brevet français FR 2 028 765 ou par la demande de brevet allemand DE-OS 2 754 816 et est placé immédiatement en aval d'un dispositif de chauffage 4 de la bande thermoplastique 2 avançant pas à pas sous le dispositif de chauffage 4 où elle est portée à la température de thermoformage, et à travers le dispositif de formage 1.

Le dispositif de formage 1 comprend, en dessous du trajet horizontal de la bande thermoplastique 3, un bloc de moule 5 qui est verticalement mobile entre une position haute de thermoformage représentée sur le dessin et une position basse de démoulage non représentée dans laquelle le récipient 2 qui vient d'être thermoformé et démoulé peut être avancé d'un pas et un nouveau tronçon de bande thermoplastique peut être introduit dans le dispositif de formage 1, l'extrémité supérieure du bloc de moule 5 se trouvant en dessous du fond du récipient 2. Ce bloc de moule 5 comporte au moins une chambre de formage 6 ouverte à son extrémité supérieure et présentant une conformation intérieure identique à la forme extérieure du récipient 2 à thermoformer, étant entendu que l'ouverture de ladite chambre 6 possède une section transversale suffisante pour permettre le démoulage dudit récipient 2. Des orifices d'évacuation d'air 7 sont ménagés dans le bloc de moule 5, débouchant dans le fond de la chambre de formage 6 et reliant celle-ci à l'atmosphère ou à une pompe à vide.

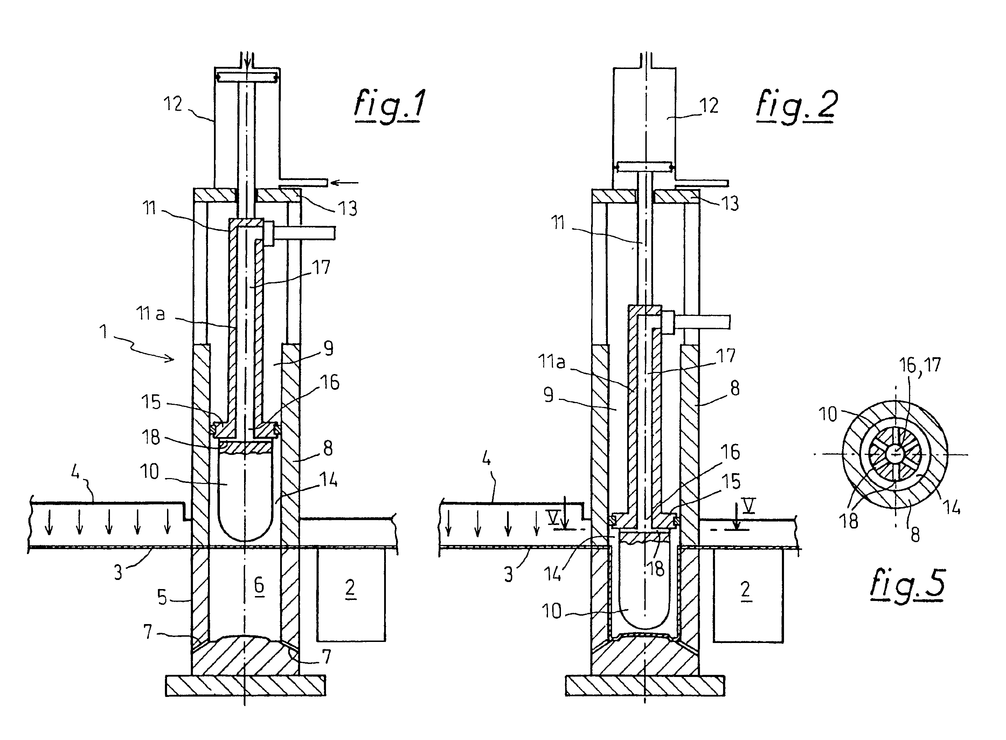

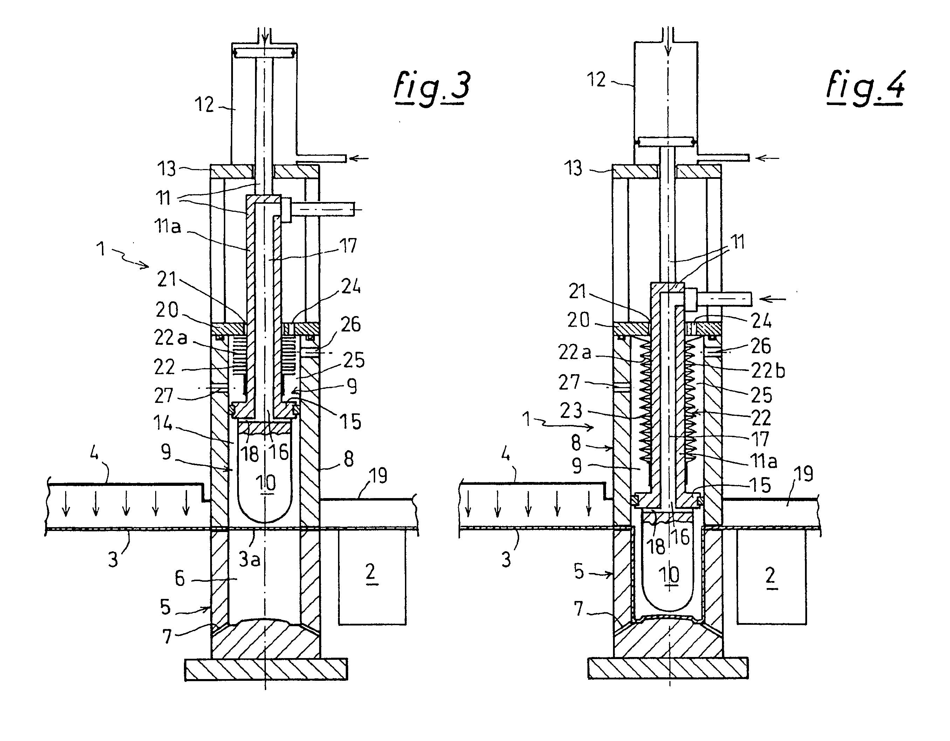

Le dispositif de formage 1 comprend, en outre, au-dessus du trajet horizontal de la bande thermoplastique 3, un bloc de contre-moule 8 qui est soit en position fixe, soit mobile verticalement sur une faible distance entre, d'une part, une position basse représentée sur le dessin, dans laquelle il est en contact avec la bande thermoplastique 3 et, en position haute du bloc de moule 5, serre celle-ci contre le bord supérieur de chaque chambre de formage 6, et, d'autre part, une position haute légèrement écartée du trajet horizontal de la bande thermoplastique pour faciliter l'avancement de celle-ci. Le bloc de contre-moule 8 est muni d'autant de cavités cylindriques 9 que le bloc de moule 5 possède de chambre de formage 6, ces cavités 9 étant disposées coaxialement aux chambres de formage 6. Selon le premier mode de réalisation représenté sur les figures 1 et 2, ces cavités cylindriques 9 sont ouvertes aux deux extrémités. Dans chaque cavité cylindrique 9 est monté un poinçon de formage 10 qui est coaxial à ladite cavité 9 et à la chambre de formage correspondante 6 et qui est verticalement mobile, par exemple, sous l'action d'une tige de commande 11 faisant partie d'un vérin de commande 12 monté sur un bâti extérieur 13. Le poinçon de formage 10 présente une partie supérieure dite inactive puisqu'elle ne participe pas directement au formage du récipient 2 ainsi qu'une partie inférieure dite active puisqu'elle participe au formage dudit récipient 2. Il est à noter que la partie supérieure inactive du poinçon de formage 10 reste toujours à l'intérieur de la cavité cylindrique 9 et en dehors de la chambre de formage 6 tandis que la partie inférieure active dudit poinçon 10 est susceptible de pénétrer verticalement dans la chambre de formage 6 et de pousser la zone de bande thermoplastique enserrée sur son bord entre le bloc de moule 5 et le bloc de contre-moule 8 autour de l'ouverture supérieure de ladite chambre 6 (voir figures 2 et 4). La partie inactive du poinçon de formage 10 présente une section transversale inférieure à celle de la cavité cylindrique 9 et la partie active dudit poinçon 10 possède des dimensions similaires mais aussi inférieures à celles de la chambre de formage correspondante 6.

Comme on peut le voir sur le dessin, il existe entre le pourtour du poinçon de formage 10 et la cavité cylindrique 9 et la chambre de formage 6 un certain jeu latéral. Un espace annulaire 14 est délimité dans chaque cavité cylindrique 9 par la face intérieure de celle-ci et par la face périphérique dudit poinçon 10. Chaque poinçon de formage 10, et plus précisément dit la partie inactive supérieure de celui-ci, est surmonté d'un piston de guidage 15 qui obture de façon étanche l'extrémité supérieure de l'espace annulaire 14 et dont la section transversale est plus grande que celle du poinçon 10 et adaptée à celle de la cavité cylindrique pour permettre audit piston 15 d'y coulisser de façon étanche sous l'action du vérin de commande 12 et de sa tige 11 dont l'extrémité inférieure est solidaire dudit piston 15. L'espace annulaire 14 est raccordé périodiquement à une source de gaz comprimé tel que de l'air comprimé, le cas échéant stérile, à l'aide d'au moins un conduit de liaison 16 débouchant dans l'espace annulaire 14 soit près de l'extrémité inférieure du bloc de contre-moule 8, soit au niveau de l'extrémité supérieure du poinçon de formage 10. Une soupape de commande non représentée est interposée dans le circuit d'alimentation en gaz comprimé, le cas échéant stérile, entre le conduit de liaison 16 et la source de gaz comprimé.

La partie supérieure inactive du poinçon de formage 10 présente une hauteur axiale inférieure à la largeur maximale dudit poinçon 10 et de préférence est assez faible mais suffisante pour que le piston de guidage 15 reste suffisamment écarté du trajet de la bande thermoplastique 3 en position basse du poin

çon de formage 10. Avantageusement, la hauteur axiale de la partie supérieure inactive du poinçon de formage 10 est comprise entre un dixième et cinq dixièmes de la largeur maximale dudit poinçon 10.

Le ou les conduits de liaison 16 peuvent être ménagés dans le piston de guidage 15 près de la périphérie de ce dernier de façon à présenter des axes parallèles à celui du piston 15 et du poinçon 10 et à déboucher directement dans l'extrémité supérieure de l'espace annulaire 14. Dans certains cas, il peut être avantageux de ménager le ou les conduits de liaison 16 dans la paroi latérale du bloc de contre-moule 8 de sorte que ces conduits débouchent soit radialement soit obliquement dans l'espace annulaire 14 près de l'extrémité inférieure dudit bloc 8, les axes des embouchures de ces conduits 16 étant situés de préférence dans un plan perpendiculaire à l'axe du poinçon 10 et du piston 15.

La tige de commande 11 dont l'extrémité inférieure est fixée coaxialement au poinçon de formage 10 sur le côté du piston de guidage 15, opposé audit poinçon 10, présente sur son tronçon inférieur d'une longueur légèrement supérieure à la hauteur de la cavité cylindrique 9 ou à celle de l'ensemble poinçon 10-piston 15, un canal coaxial 17 qui, à son extrémité supérieure, située en dehors de la cavité cylindrique 9, est raccordé alternativement à l'atmosphère ou à une source d'air comprimé par l'intermédiaire d'une soupape non représentée. Dans ce cas, le conduit de liaison 16 ménagé dans le piston de guidage 15 est aligné avec le canal coaxial 17, pénètre sur une faible hauteur dans la partie inactive du poinçon de formage 10 et est raccordé, d'une part, à l'extrémité inférieure du canal coaxial 17 et, d'autre part, aux extrémités centrales d'une pluralité de canaux radiaux 18 ménagés horizontalement dans la partie inactive du poinçon de formage 10 et débouchant au voisinage de la face inférieure du piston 15 sur la face périphérique du poinçon de formage 10.

Il est à remarquer que dans la mesure où les jets de gaz comprimé sont envoyés dans l'espace annulaire 14 soit dans un plan perpendiculaire à l'axe du poinçon de formage 10 et du piston 15, soit suivant des directions faiblement inclinées par rapport à ce plan, ces jets se brisent d'abord à l'intérieur de l'espace annulaire 14 soit contre la face intérieure de la cavité cylindrique 9, soit contre le pourtour du poinçon 10 avant d'être déviés vers la zone enserrée de bande thermoplastique 3a et l'intérieur de la chambre de formage 6. On évite ainsi avec certitude que des jets d'air comprimé soient dirigés directement contre la bande thermoplastique et percent celle-ci.

Le dispositif de formage 1 peut également être utilisé de façon avantageuse dans le cadre d'une installation de conditionnement stérile de produits stériles ou stérilisés, notamment dans une installation du type connu par la demande de brevet allemand DT-OS 2 754 816. A cet effet, l'extrémité inférieure du bloc de contre-moule 8 est montée de façon étanche sur le tunnel stérile 19 d'une installation de conditionnement, tunnel 19 dont les parois verticales latérales coopèrent avec les bords latéraux de la bande thermoplastique 3 de façon à éviter une fuite trop importante du gaz stérile en légère surpression remplissant le volume délimité par ledit tunnel 19. L'extrémité inférieure du bloc de contre-moule 8 pénètre de façon étanche dans le tunnel stérile 19. La cavité cylindrique 9 du bloc de contre-moule 8 est fermée, à son extrémité supérieure, par un couvercle 20 muni d'une ouverture centrale 21 dans laquelle est guidé le tronçon inférieur 11a de la tige de commande 11. A l'intérieur de la cavité cylindrique 9, c'est-à-dire, sur sa partie pénétrant à l'intérieur de ladite cavité 9, le tronçon inférieur 11a est entouré de façon étanche d'un soufflet de protection 22 qui s'étend à partir du couvercle 20 soit jusqu'au piston de guidage 15 soit jusqu'à un endroit du tronçon inférieur 11a proche dudit piston 15. L'extrémité inférieure du soufflet de protection 22 est fixée de façon étanche soit sur le piston 15, soit sur le tronçon inférieur 11a de la tige de commande 11 à proximité dudit piston 15. L'extrémité supérieure du soufflet de protection 22 est fixée de façon étanche sur le couvercle 20 autour de l'ouverture centrale 21 de celui-ci ou bien est montée en tant que joint d'étanchéité entre l'extrémité supérieure du bloc de contre-moule 8 et la face inférieure du couvercle 20. La structure du soufflet 22 est d'un type connu qui peut comporter à l'intérieur de chaque pli de soufflet 22a une rondelle de rigidification 22b entourant le tronçon inférieur 11a de façon à pouvoir coulisser librement le long de celui-ci. Le volume annulaire variable 23 entouré par le soufflet 22 et délimité pour l'essentiel par la face inférieure du couvercle 20, la face intérieure du soufflet 22 et la partie du tronçon inférieur 11a pénétrant dans la cavité cylindrique 9 et, le cas échéant, par une partie de la face supérieure du piston de guidage 15 est relié en permanence à l'atmosphère par l'ouverture centrale de guidage 21 du couvercle 20 et/ou par un trou de respiration 24 ménagé dans ledit couvercle 20 à l'intérieur du bord supérieur du soufflet 22. La chambre annulaire 25 prévue à l'intérieur de la cavité cylindrique 9 et délimitée par la face interne de celle-ci, par la face extérieure du soufflet de protection 22, par la face supérieure du piston de guidage 15 et, le cas échéant, par les parties libres du tronçon inférieur 11a logé dans ladite cavité 9, et de la face inférieure du couvercle 20 non recouverte par le soufflet 22, est alimentée en période de service et est remplie en permanence d'un gaz stérile en légère surpression par rapport à la pression atmosphérique, cette alimentation s'effectuant à travers un orifice d'entrée 26 ménagé près du couvercle 20 dans la paroi latérale du bloc de contre-moule 8 et raccordé à un circuit d'alimentation approprié qui permet de maintenir dans cette chambre annulaire 25 une légère surpression sensiblement constante malgré les variations du volume de ladite chambre 25. Il est à noter que dans le cas d'un conditionnement stérile des produits, le ou les conduits de liaison 16, y compris les canaux radiaux 18 débouchant dans l'espace annulaire 14 et le canal coaxial 17, sont raccordés périodiquement, à l'extérieur de la cavité cylindrique 9, à une source de gaz stérile sous pression, par l'intermédiaire d'une soupape de commande non représentée.

Afin de faciliter la restérilisation et le nettoyage de la chambre annulaire 25 et de tous les éléments qui la délimitent, celle-ci est susceptible d'être raccordée à un circuit de stérilisation (eau chaude, vapeur d'eau surchauffée à forte pression) à travers, d'une part, l'orifice d'entrée 26 et, d'autre part, un orifice de sortie 27 prévu dans la paroi latérale du bloc de contre-moule 8 à un endroit diamétralement opposé à l'emplacement de l'orifice d'entrée 26 et situé légèrement au-dessus du piston de guidage 15 en position haute dans laquelle le poinçon de formage 10 est logé entièrement à l'intérieur de la cavité cylindrique 9 et les plis annulaires 22a du soufflet 22 sont rapprochés les uns des autres et en contact mutuel (figure 3). Il est avantageux de revêtir le poinçon de formage 10 d'une couche de matière plastique souple à base de silicone. Cette mesure permet au poinçon 10 d'atteindre rapidement et de maintenir une température constante d'une valeur proche ou égale de celle de la bande thermoplastique 3 au moment du thermoformage.

Le procédé de thermoformage d'un récipient thermoplastique 2 à l'aide du dispositif de formage qui vient d'être décrit se comprend de lui-même. Une zone de bande thermoplastique 3a préchauffée à la température de thermoformage est enserrée sur son bord entre, d'une part, l'extrémité supérieure du bloc de moule 5, extrémité entourant l'ouverture de la chambre de formage 6, et, d'autre part, l'extrémité inférieure du bloc de contre-moule 8, extrémité entourant la cavité cylindrique 9 à l'intérieur de laquelle se trouve alors entièrement rétracté le poinçon de formage 10. En raison même de la structure du dispositif, notamment en raison du piston de guidage 15 prévu dans la cavité cylindrique 9 au-dessus du poinçon 10, on ferme hermétiquement l'espace annulaire 14 dès que l'on enserre la zone de bande préchauffée 3a, avant l'opération de thermoformage d'un récipient 2 à partir de cette zone de bande 3a. Le volume de cet espace annulaire 14 varie pendant l'opération de thermoformage lors de la descente du poinçon de formage 10 et l'injection du gaz comprimé. Cet espace annulaire 14 étant hermétiquement fermé pendant toute la course descendante du poinçon de formage 10 au cours de laquelle ce dernier quitte partiellement la cavité cylindrique 9 et pénètre dans la chambre de formage 6 jusqu'au voisinage du fond de celle-ci, on peut y injecter le gaz sous pression dès la fermeture dudit espace 14 et on l'y injecte au plus tard à la fin de la course descendante du piston de formage 10. En conséquence, si certains matériaux composant la bande thermoplastique 3 l'exigent, on peut injecter le gaz sous pression dans l'espace annulaire 14 hermétiquement fermé, déjà pendant la course descendante du poinçon de formage 10. Le gaz comprimé peut être injecté dans l'espace annulaire 14 près de l'extrémité supérieure du poinçon 10 et sous la face inférieure du piston 15 ou encore près de l'extrémité inférieure du bloc de contre-moule 8 à l'intérieur de la cavité cylindrique 9 de ce dernier. Il est avantageux d'injecter le gaz comprimé dans l'espace annulaire 14 sous forme de jets de gaz multiples et de les orienter de telle sorte qu'ils ne frappent pas directement la zone de bande enserrée 3a. A cet effet, on injecte le gaz sous pression sous forme de jets radiaux s'étendant pour l'essentiel dans un plan perpendiculaire à l'axe de la cavité cylindrique 9 à l'intérieur de celle-ci. Dans ce cas, les jets gazeux sont orientés pour l'essentiel perpendiculairement soit à la paroi de la cavité cylindrique 9 et en direction de celle-ci, soit à l'axe de ladite cavité 9 et en direction de celui-ci. Ainsi, les jets gazeux frappent d'abord soit la paroi de la cavité 9 soit le pourtour du poinçon de formage 10 avant d'être détournés vers la chambre de formage 6 et sur la zone de bande enserrée 3a.

L'objet de la présente invention peut subir un certain nombre de modifications à la portée de l'homme de métier sans que l'on sorte du cadre de protection défini par les revendications annexées.

## Revendications

1. Dispositif de formage (1) d'articles creux tels que des récipients (2), à partir d'une bande thermoplastique (3) préalablement chauffée, du type comportant, d'une part, en dessous du trajet horizontal de ladite bande thermoplastique (3), un bloc de moule (5) verticalement mobile entre une position haute de thermoformage et une position basse de démoulage des récipients (2) et muni d'au moins une chambre de formage (6) ouverte à sa partie supérieure et de même forme interne que l'article à fabriquer (2), et, d'autre part, au-dessus dudit trajet horizontal, un bloc de contre-moule (8) soit fixe, soit faiblement mobile verticalement entre une position basse dans laquelle il serre la bande thermoplastique (3) contre le bord supérieur de chaque chambre de formage (6) et une position haute légèrement écartée dudit trajet de ladite bande thermoplastique (3), et muni d'autant de cavités cylindriques (9) que le bloc de moule (5) possède de chambres de formage (6) dont chacune est coaxiale à une desdites cavités cylindriques (9) dans chacune desquelles est monté un poinçon coaxial de formage (10) présentant une partie inactive supérieure et une partie active inférieure, poinçon dont la partie inactive reste dans la cavité cylindrique (9) et dont la partie active est susceptible de pénétrer verticalement dans la chambre de formage correspondante (6) et possède des dimensions similaires mais inférieures à celles de ladite chambre de formage (6), l'espace annulaire (14) délimité par les faces intérieures de la chambre de formage (6) et de la cavité cylindrique (9), d'une part, et par la face périphérique du poinçon de formage (10), d'autre part, étant raccordé périodiquement à une source de gaz comprimé, caractérisé en ce que la partie inactive de chaque poinçon de formage (10) présente une hauteur axiale inférieure à la largeur maximale dudit poinçon (10), que chaque poinçon de formage (10) est surmonté d'un piston de guidage (15) qui coulisse de façon étanche dans la cavité cylindrique correspondante (9) du bloc de contre-moule (8) et que l'espace annulaire (14) se trouvant en dessous du piston de guidage (15) est susceptible de communiquer périodiquement avec une source de gaz comprimé à travers au moins un conduit de liaison (16).

2.  Dispositif de formage selon la revendication 1, caractérisé en ce que le piston de guidage (15) est muni d'au moins un conduit de liaison (16) à travers lequel l'espace annulaire (14) est raccordé périodiquement à une source de gaz comprimé.

3.  Dispositif de formage selon la revendication 1, caractérisé en ce que, au moins un conduit de liaison (16) est ménagé dans la paroi latérale du bloc de contre-moule (8) et débouche dans l'espace annulaire (14) près de l'extrémité inférieure dudit bloc (8).

4.  Dispositif de formage selon la revendication 3, caractérisé en ce que le ou les conduits de liaison comprennent une pluralité de canaux radiaux ménagés dans la paroi latérale du bloc de contre-moule (8) et débouchant dans l'espace annulaire (14) près de l'extrémité inférieure dudit bloc (8).

5.  Dispositif de formage selon la revendication 1 caractérisé en ce que la hauteur axiale de la partie inactive du poinçon de formage (10) est comprise entre un dixième et cinq dixièmes de la largeur maximale dudit poinçon (10).

6.  Dispositif de formage selon l'une des revendications 1 à 5, caractérisé en ce que le piston de guidage (15) présente du côté opposé au poinçon de formage (10) une tige de commande (11).

7.  Dispositif de formage selon la revendication 6, caractérisé en ce que sur son tronçon inférieur (11a) d'une longueur légèrement supérieure à la hauteur de la cavité cylindrique (9), la tige de commande (11) est munie d'un canal coaxial (17) qui, à son extrémité supérieure, est raccordé à une source de gaz comprimé par l'intermédiaire d'une soupape et que le conduit de liaison (16) traversant le piston de guidage (15) est aligné avec ledit canal coaxial (17), pénètre sur une faible hauteur dans la partie inactive du poinçon de formage (10) et est raccordé, d'une part, à l'extrémité inférieure du canal coaxial (17), et, d'autre part, à une pluralité de canaux radiaux (18) ménagés horizontalement dans la partie inactive du poinçon de formage (10) et débouchant au voisinage de la face inférieure du piston de guidage (15) sur la face périphérique du poinçon de formage (10).

8.  Dispositif de formage selon l'une des revendications 1 à 7 et selon lequel l'extrémité inférieure du bloc de contre-moule (8) pénètre de façon étanche dans le tunnel stérile (19) d'une installation de conditionnement stérile de produits stériles ou stérilisés, caractérisé en ce que la cavité cylindrique (9) du bloc de contre-moule (8) est fermée, à son extrémité supérieure, par un couvercle (20) muni d'une ouverture centrale (21) dans laquelle est guidé le tronçon inférieur (11a) de la tige de commande (11) du poinçon de formage (10), que, sur sa partie pénétrant dans la cavité cylindrique (9), ledit tronçon inférieur (11a) est entouré, de façon étanche, d'un soufflet de protection (22) dont l'extrémité inférieure est fixée sur le piston de guidage (15) ou près de celui-ci, sur ledit tronçon inférieur (11a) et dont l'extrémité supérieure est montée sur ledit couvercle (20), que le volume annulaire (23) variable et délimité par le couvercle (20), la face intérieure du soufflet de protection (22) et le tronçon inférieur (11a) de la tige de commande (11) est relié en permanence à l'atmosphère, que la chambre annulaire (25) délimitée par la face extérieure du soufflet de protection (22), la face interne de la cavité cylindrique (9), la face supérieure du piston de guidage (15) et, le cas échéant, la partie libre du tronçon inférieur (11a) de la tige de guidage (11), est alimentée en période de service, d'un gaz stérile en légère surpression par rapport à la pression atmosphérique et que le ou les conduits de liaison (16) y compris les canaux radiaux sont raccordés périodiquement, en dehors de la cavité cylindrique (9), à une source de gaz stérile sous pression, par l'intermédiaire d'une soupape de commande.

9.  Dispositif de formage selon la revendication 8, caractérisé en ce que l'extrémité supérieure du soufflet de protection (22) est montée en tant que joint d'étanchéité entre le couvercle (20) et l'extrémité supérieure du bloc de contre-moule (8).

10. Dispositif de formage selon la revendication 8, caractérisé en ce que la chambre annulaire (25) est susceptible d'être raccordée à un circuit de stérilisation à travers, d'une part, un orifice d'entrée (26) ménagé près du couvercle dans la paroi latérale du bloc de contre-moule (8) et, d'autre part, un orifice de sortie (27) prévu dans ladite paroi latérale légèrement au-dessus du piston de guidage (15) en position haute dans laquelle le poinçon de formage (10) se trouve entièrement à l'intérieur de la cavité cylindrique (10) et les plis annulaires (22a) du soufflet de protection (22) sont rapprochés les uns des autres.

11. Dispositif de formage selon l'une des revendications 1 à 10, caractérisé en ce que le poinçon de formage (10) est recouvert d'une couche de matière plastique souple à base de silicone.

12. Procédé de formage d'articles creux (2) tels que des récipients, à partir d'une bande thermoplastique (3), procédé du type selon lequel on préchauffe des zones déterminées successives de la bande thermoplastique (3) à la température de thermoformage, on enserre de part et d'autre le bord d'au moins une zone préchauffée de bande thermoplastique (3a) entre, d'une part, l'extrémité supérieure d'un bloc de moule inférieur (5) contenant au moins une chambre de formage (6) et, d'autre part, l'extrémité inférieure d'un bloc de contre-moule supérieur (8) comportant au moins une cavité cylindrique (9) qui est coaxiale à ladite chambre de formage (6) et dans laquelle est logé, avec un jeu latéral, un poinçon de formage (10) disposé coaxialement à ladite chambre de formage (6) et verticalement mobile entre une position haute dans laquelle son extrémité inférieure est rétractée entièrement dans ladite cavité cylindrique (10), et, une position basse dans laquelle ladite extrémité inférieure du poinçon (10) est proche du fond de la chambre de formage (6) lorsque celle-ci occupe sa position haute de thermoformage, on thermoforme un article creux (2) à partir de la zone de bande (3a) enserrée sur son bord, en poussant ladite zone de bande à l'intérieur de la chambre de formage (6) à l'aide du poinçon de formage (10) et en injectant un gaz sous pression dans l'espace annulaire (14) délimité par ladite zone de bande enserrée (3a), le poinçon de formage (10) et la cavité cylindrique (9) en vue d'appliquer ladite zone de bande enserrée (3a), contre la face intérieure et le fond de la chambre de formage (6), caractérisé en ce que, avant l'opération de thermoformage d'un article creux ou récipient (2), on ferme hermétiquement l'espace annulaire (14) délimité par la zone préchauffée de bande thermoplastique (3a) enserrée sur son bord entre le bloc de moule (5) et le bloc de contre-moule (8), par la face extérieure du poinçon de formage (10) et par la face intérieure de la cavité cylindrique (9), on maintient cet espace (14) hermétiquement fermé pendant toute la course descendante du poinçon de formage (10) et l'on injecte dans cet espace (14) hermétiquement fermé le gaz sous pression au plus tard à la fin de la course descendante du poinçon de formage (10).

13. Procédé selon la revendication 12, caractérisé en ce que l'on injecte le gaz sous pression dans l'espace annulaire (14) hermétiquement fermé, pendant la course descendante du poinçon de formage (10).

14. Procédé selon l'une des revendications 12 et 13 caractérisé en ce que l'on obture en permanence à l'aide d'un piston de guidage (15) l'extrémité supérieure de l'espace annulaire (14) délimité à l'opposé par la zone de bande enserrée (3a).

15. Procédé selon l'une des revendications 12 à 14, caractérisé en ce que l'on injecte le gaz sous pression dans l'espace annulaire (14) près de l'extrémité supérieure du poinçon de formage (10).

16. Procédé selon l'une des revendications 12 à 14, caractérisé en ce que l'on injecte le gaz sous pression dans l'espace annulaire (14) près de l'extrémité inférieure du bloc de contre-moule (8).

17. Procédé selon l'une des revendications 12 à 16, caractérisé en ce que l'on injecte le gaz sous pression sous forme de jets radiaux s'étendant pour l'essentiel dans un plan perpendiculaire à l'axe de la cavité cylindrique (9).

18. Procédé selon la revendication 17 caractérisé en ce que l'on injecte le gaz sous pression sous forme de jets gazeux orientés pour l'essentiel perpendiculairement à et en direction vers la paroi ou l'axe de la cavité cylindrique (9).

19. Procédé selon l'une des revendications 12 à 18, caractérisé en ce que l'on utilise en tant que gaz d'injection un gaz stérile et l'on alimente la chambre annulaire (25) de la cavité (9), chambre (25) située au-dessus du piston de guidage (15), avec un gaz stérile en légère surpression par rapport à la pression atmosphérique.

_Fig.1_   _Fig.2_   _fig.5_

fig.3

fig.4

EP 0 457 664 A1

## Office européen des brevets

# RAPPORT DE RECHERCHE EUROPEENNE

Numero de la demande

EP    91 40 1233

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X,D | US-A-3 450 807 (G.W. CHENEY)<br><br>* le document en entier *<br>--- | 1,2,4-7,<br>12-18 | B29C51/04<br>B29C51/26 |
| A | US-A-3 510 913 (B. EDWARDS)<br>* le document en entier *<br>--- | 1,12 | |
| A,D | FR-A-2 374 217 (GATRUN ANSTALT)<br>* figures *<br>--- | 8 | |
| A | US-A-3 465 071 (B. EDWARDS)<br>--- | | |
| A | US-A-3 483 284 (R.K. SHELBY)<br>----- | | |

**DOMAINES TECHNIQUES RECHERCHES (Int. Cl.5 )**

B29C

Le présent rapport a été établi pour toutes les revendications

| Lieu de la recherche | Date d'achèvement de la recherche | Examinateur |
|---|---|---|
| LA HAYE | 12 AOUT 1991 | SZAMOCKI G.J.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P0402)